# EUROPÄISCHE PATENTSCHRIFT

(11) **EP 2 212 166 B1**
(45) Veröffentlichungstag und Bekanntmachung des Hinweises auf die Patenterteilung: **07.01.2015**
(21) Anmeldenummer: 08805251.9
(22) Anmeldetag: 13.10.2008
(51) Int. Cl.: B60T 8/36

(54) **HYDRAULIKAGGREGAT FÜR SCHLUPFGEREGELTE BREMSANLAGEN**
HYDRAULIC UNIT FOR SLIP-CONTROLLED BRAKING SYSTEMS
GROUPE HYDRAULIQUE POUR SYSTÈMES DE FREINAGE ANTIPATINAGE

(30) Priorität: 19.10.2007 DE 102007050101; 19.01.2008 DE 102008005279
(43) Veröffentlichungstag der Anmeldung: 04.08.2010
(73) Patentinhaber: Continental Teves AG & Co. OHG, 60488 Frankfurt (DE)
(72) Erfinder: GASTAUER, Heiko, 66679 Losheim am See (DE); HINZ, Axel, 61267 Neu-anspach (DE); FISCHBACH-BORAZIO, Petra, 60488 Frankfurt/M (DE); GREIFF, Uwe, 61352 Bad Homburg (DE)
(86) Internationale Anmeldenummer: PCT/EP2008/063718
(87) Internationale Veröffentlichungsnummer: WO 2009/053266

(56) Entgegenhaltungen:
- WO-A-99/64283
- WO-A-2004/031013
- WO-A-2005/050015
- WO-A-2007/024636
- WO-A-2007/057285
- WO-A-2009/010191
- US-A1- 2007 176 484

## Beschreibung

Die Erfindung betrifft ein Hydraulikaggregat mit den Merkmalen vom Oberbegriff vom Patentanspruch 1.

Ein derartiges Aggregat eignet sich bevorzugt zum Einsatz innerhalb eines elektrohydraulischen Bremssystems, indem der Fahrzeugführer einen Bremswunsch äußert, welcher gewissermaßen by-wire anhand von entsprechender Aktuatorik - bevorzugt unter Berücksichtigung von den erfassten Umgebungsbedingungen - von dem Bremssystem umgesetzt wird.

Bei elektrohydraulischen Bremssystemen erfolgt der Druckaufbau in Radbremsen entweder unmittelbar direkt mit Hilfe von einer Druckquelle, meist in Form von Verdrängerpumpvorrichtungen die Kolben aufweisen, oder mittelbar anhand von einem Druckspeicher. Diese mechatronischen Systeme umfassen stets eine komplexe Elektronikeinheit mit umfangreicher Softwareausstattung, sowie eine komplexe Hydraulikeinheit, die auf einem hydraulischen Schaltplan basiert, und eine ordnungsgemäße Aufnahme, Anordnung und Verbindung einer Vielzahl von hydraulischen und elektrohydraulischen Komponenten sicherstellt, die planmäßig von der Elektronikeinheit angesteuert werden.

Die in Rede stehenden Systeme müssen vielfachen Anforderungen gerecht werden. Insbesondere neuartige Anwendungsfälle sollen mit der erforderlichen Zuverlässigkeit durchführbar sein. Geringe Baugröße und geringes Gewicht werden stets angestrebt. Das Betätigungsgefühl, insbesondere auch der Betätigungskomfort in Hinblick auf Geräusch und Pulsation, soll verbessert sein, weil die Betätigungshäufigkeit des Hydraulikaggregates tendenziell ansteigt, und das Geräuschniveau im Kraftfahrzeuginnenraum tendenziell abgesenkt ist, insbesondere wenn elektrische Antriebe Verwendung finden. Das System soll mit Hybridantriebssystemen harmonieren und dennoch muss eine zuverlässige, großserientechnische Herstellung ermöglicht werden, die es erlaubt, das System schließlich gewinnbringend zu vermarkten.

Aus der WO 2004/031013 A1 ist ein Hydraulikaggregat für schlupfgeregelte Bremsanlagen bekannt, welches drei Fördervorrichtungen vom Kolbentyp aufweist, die in einem Aufnahmekörper für elektrohydraulische Ventilreihen integriert vorgesehen sind. Es werden Vorschläge unterbreitet, ein Hydraulikaggregat mit mehreren Fördervorrichtungen nach der angegebenen Art derart zu verbessern, daß es bei effizienter Ausnutzung des Bauraumes im Aufnahmekörper, sowie bei geringem Betriebsgeräusch, zum Einsatz bei elektrohydraulischen Bremsanlagen geeignet ist. Zu diesem Zweck sind die Aufnahmebohrungen für die Fördervorrichtungen regelmäßig im Winkel von 120° zueinander sowie in einer besonderen Relation zu den Aufnahmebohrungen für Ventilreihen im Aufnahmekörper integriert. Die Konfiguration ist verbesserungsfähig, und der Schrift sind keine Hinweise zu entnehmen, mehr als drei Fördervorrichtungen im Aufnahmekörper zu implementieren.

Um reduzierte Pulsationswirkungen mit einer fertigungstechnisch einfach herstellbaren Sechskolbenpumpe für eine Fahrzeugbremsanlage miteinander zu vereinen, wird gemäß WO 2005/050015 A1 eine schnittebenenbasierte Verteilung von gruppenweise gebündelten Fördervorrichtungen vorgeschlagen, die mittels zweier, axial beabstandeter, sowie zueinander in Umfangsrichtung phasenversetzter Exzenter angetrieben werden. Jeweils zwei Fördervorrichtungen, die in einer ersten Schnittebene vom Aufnahmekörper angeordnet sind, bilden zusammen mit einer weiteren Pumpeneinheit, die in einer dazu parallel versetzten Schnittebene angeordnet ist, eine gemeinsame Druckquelle zur Versorgung von einem Hydraulikkreis des Fahrzeugbremssystems. Zur Versorgung von einem zweiten Hydraulikkreis ist eine weitere derartige Gruppierung von Fördervorrichtungen vorgesehen. Die phasenversetzte Zwangssteuerung der Fördervorrichtungen ist so ausgebildet, dass saugseitig kaum Pulsationsschwankungen spürbar sind. Dieser Pulsationsausgleich mittels Zwangssteuerung anhand von zwei Exzentern, wird erkauft, indem die Aufnahmebohrungen für die sechs Pumpeneinheiten hinsichtlich deren gegenseitigen Drehwinkelabstand unregelmäßig platziert sind. Zwar wird prinzipiell der Vorteil erzielt, dass nur zwei Aufnahmebohrungen für Fördervorrichtungen nicht parallel zu einer Senkrechten oder Waagerechten vom Aufnahmekörper verlaufen. Die derart vorrangige Behandlung der Aufnahmebohrungen für die Fördervorrichtungen bedingt jedoch eine raumaufwändigere Platzierung der restlichen Komponenten. Diese Vorgehensweise leidet gewissermaßen unter dem Nachteil, dass sämtliche weiteren Komponenten, mit zugehörigen Verbindungskanälen, gewissermaßen um die Aufnahmebohrungen der Fördervorrichtungen herum konstruiert sein müssen. Dies verursacht einen entsprechend hohen verbohrungstechnischen Aufwand. Das gilt insbesondere für die jeweils gruppenweise gebündelte Anbindung an einen Druckpfad und an einen Saugpfad, wobei die entsprechende Anbindung eine recht große Zahl von Bohrungsabschnitten erfordert, welche jeweils von unterschiedlichsten Seiten in den Aufnahmekörper einmünden, und sich vielfach kreuzen müssen. Insbesondere ein Druckpfad umfasst nicht weniger als 5 einzelne Kanalabschnitte (36a-36e).

Aus US 2007/176484 A1 ist bereits ein Hydraulikaggregat der angegebenen Art bekannt, das ein Anordnung von jeweils zwei Aufnahmebohrungen für Fördervorrichtungen in drei horizontalen Ebenen aufweist, wobei die Aufnahmebohrungen für die Fördervorrichtungen in jeder horizontalen Ebene diametral einander gegenüber stehen, sowie mit einer zwischen den Aufnahmebohrungen angeordneten Antriebswelle, die über drei gesonderte Exzenter verfügt.

Die WO 99/64283 A offenbart ein Hydraulikaggregat für eine hydraulische Fahrzeugbremsanlage, mit einer Sechskolbenpumpe, deren Stufenkolben abwechselnd um 30° und um 90°phasenversetzt zueinander angetrieben werden. Die für die Stufenkolben im Hydraulikaggregat vorgesehenen Aufnahmebohrungen sind anstelle in einer Sternanordnung bei Wunsch oder Bedarf ebenso für zwei Stufenkolben in einer V-Anordnung darstellbar.

Es ist eine Aufgabe der vorliegenden Erfindung, ein Hydraulikaggregat mit einer Mehrkolbenpumpe zur Verfügung zu stellen, das die Nachteile vom Stand der Technik vermeidet, und einen verbesserten Kompromiss einer Verbohrungskonfiguration ermöglicht.

Diese Aufgabe wird erfindungsgemäß für ein Hydraulikaggregat der eingangs genannten Gattung durch die kennzeichnenden Merkmale des Patentanspruchs 1 gelöst.

Die erfindungsgemäß vorgeschlagene Konfiguration besteht folglich im Wesentlichen darin, die relativ voluminösen Aufnahmebohrungen für die Fördervorrichtungen jeweils paarweise v-förmig im Winkel zueinander, innerhalb dreier gedachter Horizontal-Ebenen E1, E2, E3 anzuordnen. Indem die Fördervorrichtungen gewissermaßen innerhalb dieser Horizontal-Ebenen E1-E3 geschichtet, aber nur relativ geringfügig zu einer gemeinsamen Vertikalebene V1 versetzt, platziert sind, werden im Aufnahmekörper relativ weitläufige Zonen ohne Aufnahmebohrungen für Förderrichtungen geschaffen, welche weitgehend vollständig - ohne Rücksicht auf die Fördervorrichtungen - zur Anordnung anderer Komponenten nutzbar sind. Weiterhin ermöglicht eine derart gebündelte Konfiguration einen vereinfachten Bohrungsprozess bei verdichteter Bauweise.

Die Aufnahmebohrungen für die Fördervorrichtungen sind in allen Horizontalebenen mit konstantem Öffnungswinkel versehen.

Jedoch ist der Öffnungswinkel von Horizontalebene zu Horizontalebene wechselweise um einen konstanten Offsetwinkel versetzt.

Eine Maßkontrolle wie auch eine Programmierung von Fertigungsmaschinen wird vereinfacht, wenn das Bohrungsschema vom Aufnahmekörper im Wesentlichen symmetrisch zu einer gedachten Vertikalebene ausgebildet ist. Prinzipiell gleiches gilt, wenn die Abstände zwischen den unterschiedlichen Horizontal-Ebenen zu gleichen Teilen gewählt sind.

Die Anzahl von Einspannungs- und Umspannvorgängen wird reduziert, indem die Aufnahmebohrungen für die Fördervorrichtungen eines Hydraulikkreises jeweils einheitlich von einer Seite des Aufnahmekörpers ausgehen.

Im Sinne einer Vereinheitlichung des Bohrungsbildes ist es erfindungsgemäß vorgesehen, dass jeweils zwei Aufnahmebohrungen der Fördervorrichtungen eines gemeinsamen Hydraulikkreises lotrecht zur Oberseite, sowie deckungsgleich über einander, angeordnet sind, und dass eine Aufnahmebohrung für eine Fördervorrichtung dieses Hydraulikkreises im spitzen Winkel versetzt zu den beiden anderen Aufnahmebohrungen vorgesehen ist.

Ganz generell weist jede Ebene oder Schnittebene zwei Aufnahmebohrungen auf, wobei die Aufnahmebohrungen jeweils v-förmig im Winkel zueinander angeordnet sind, und der eingeschlossene Winkel zwischen mehr als 90° und maximal 180° beträgt. Wenn die Ebene mit der spitzwinklig versetzten Aufnahmebohrung zwischen den Schnittebenen der vertikal deckungsgleich platzierten Aufnahmebohrungen angeordnet ist, ermöglicht dies eine besonders raumsparende, verdichtete Bauweise.

Der Verbohrungsaufwand wird weiterhin reduziert, wenn Ventilaufnahmebohrungen im Wesentlichen lotrecht oberhalb von den Aufnahmebohrungen für Fördervorrichtungen angeordnet sind, so dass für eine saugseitige gruppenweise Bündelung der Fördervorrichtungen im Wesentlichen lineare, Vertikal-Kanalabschnitte vorgesehen sind, welche ausgehend von diesen Ventilaufnahmebohrungen lotrecht in den Aufnahmekörper eintreten, und in die Aufnahmebohrungen der Fördervorrichtungen einmünden.

Weitere Einzelheiten der Erfindung gehen aus der Beschreibung anhand der Zeichnung hervor. In der Zeichnung zeigt.
Fig. 1 ein schematischer Schaltplan von einem Fahrzeugbremssystem mit jeweils drei parallel geschalteten Fördervorrichtungen je Hydraulikkreis,
Fig. 2 Schnitt durch ein Hydraulikaggregat mit insgesamt sechs jeweils in die Zeichenebene gedreht verdeutlichten Fördervorrichtungen,
Fig. 3 ein vereinfachtes Hydraulikaggregat in perspektivisch-schematischer Ansicht,
Fig. 4 perspektivische Aufsicht auf eine Oberseite eines Hydraulikaggregats mit Aufnahmebohrungen für Ventilreihen,
Fig. 5 perspektivisch eine Untersicht von einem Hydraulikaggregat,
Fig. 6 perspektivische Ansicht vom Saugpfad der Fördervorrichtungen, und
Fig. 7 perspektivische Ansicht vom Druckpfad der Fördervorrichtungen.

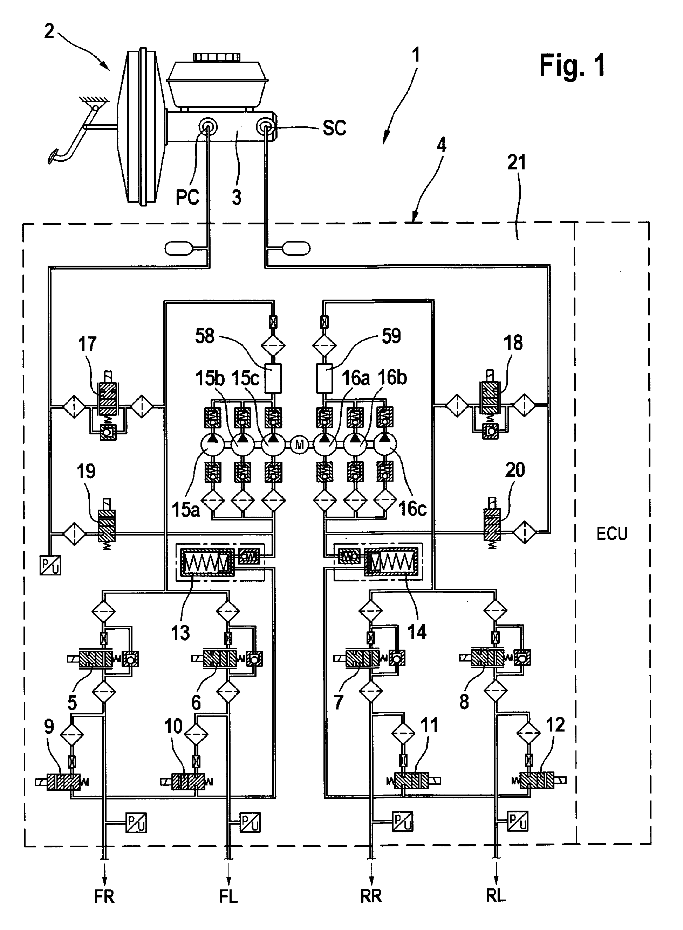

Gemäß Fig. 1 umfasst eine elektrohydraulische Bremsanlage 1 eine Betätigungseinheit 2 mit einem Hauptzylinder 3 sowie jeweils zwei in zwei unterschiedlichen Hydraulikkreisen organisierte Radbremsen FR, FL, RR, RL, welche jeweils gebündelt sowie unabhängig voneinander entweder mit einer Primärdruckkammer PC oder mit einer Sekundärdruckkammer SC von dem Hauptzylinder 3 verbunden sind.

In der Verbindung zwischen Hauptzylinder 3 und Radbremsen FR,FL,RR,RL befindet sich weiterhin ein Hydraulikaggregat 4 mit elektronischer Steuerung ECU, das eine Brems- oder Antriebsschlupfregelung ermöglicht. Das Hydraulikaggregat 4 umfasst zu diesem Zweck in einem Aufnahmekörper 21 stromlos offene Einlassventile 5-8 sowie stromlos geschlossene Auslassventile 9-12, die jeweils paarweise den Radbremsen FR, FL, RR, RL vorgeschaltet sind.

Unnötig hoch aufgebauter Druck innerhalb ABS-Regelzyklen durch Aktivierung der stromlos geschlossenen Auslassventile 9-12 und Ablassen des Hydraulikfluids in jeweils einen Niederdruckspeicher 13,14 abgebaut werden. In jedem Hydraulikkreis sind weiterhin jeweils drei Fördervorrichtungen 15a,b,c; 16a,b,c parallel zueinander geschaltet, um das Hydraulikfluid aus den Niederdruckspeichern 13,14 in Richtung Hauptzylinder 3 zurück zu fördern. Die jeweils drei Fördervorrichtungen 15a,b,c; 16a,b,c je Hydraulikkreis ermöglichen nicht nur eine weitgehend gleichmäßige, pulsationsfreie Rückförderfunktion, sondern im Vergleich zu herkömmlichen Einkolbenpumpen weiterhin einen beschleunigten Druckaufbau sowie einen erhöhten Volumenstrom.

Um für die Fahrstabilitätsregelvorgänge, oder für vergleichbare nachgefragte Funktionen, mit den Fördervorrichtungen 15a,b,c; 16a,b,c fahrerunabhängig Druck in einer oder mehreren Radbremsen FR, FL, RR, RL aufbauen zu können, ist weiterhin je Hydraulikkreis jeweils ein stromlos offenes Trennventil 17,18 sowie ein stromlos geschlossenes Umschaltventil 19,20 vorgesehen. Das Trennventil 17,18 dient zum Abtrennen der grundsätzlich offenen hydraulischen Verbindung zwischen Hauptzylinder 3 und den Radbremsen FR, FL, RR, RL. Durch das Umschaltventil 19,20 wird es dagegen ermöglicht, Saugpfad und Druckpfad für die Fördervorrichtungen 15a,b,c;16a,b,c, derart abzuändern, dass für die fahrerunabhängigen Regelvorgänge nicht aus den Niederdruckspeichern 13,14 sondern aus den Druckkammern PC, SC vom Hauptzylinder 3 angesaugt wird, um das Fluid nicht in Richtung Hauptzylinder 3 sondern zum Druckaufbau in Richtung Radbremsen 15a,b,c;16a,b,c, zu fördern.

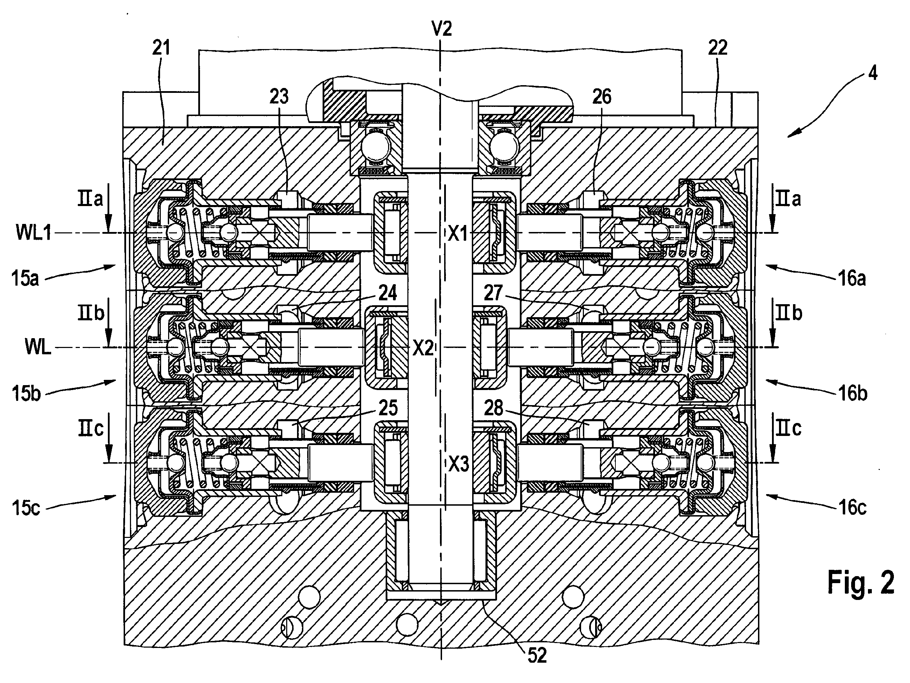

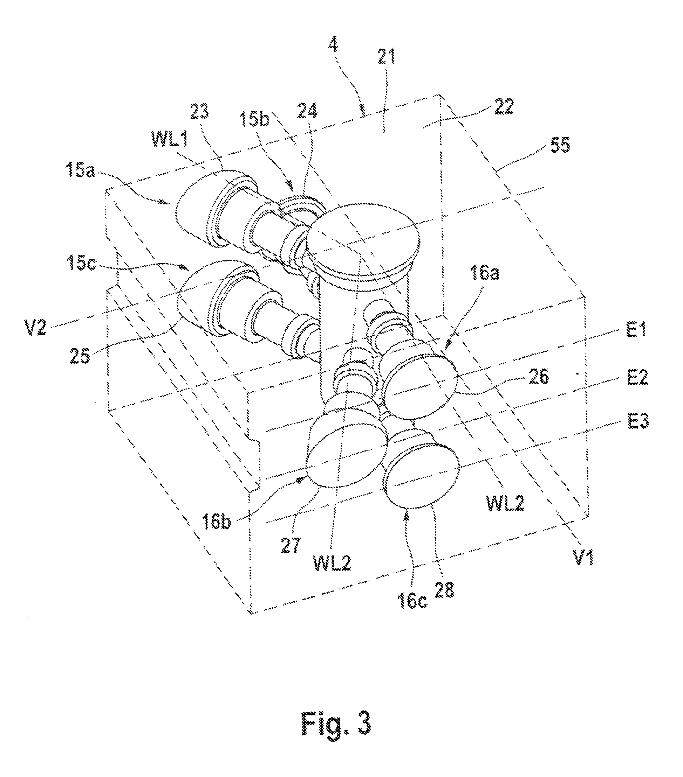

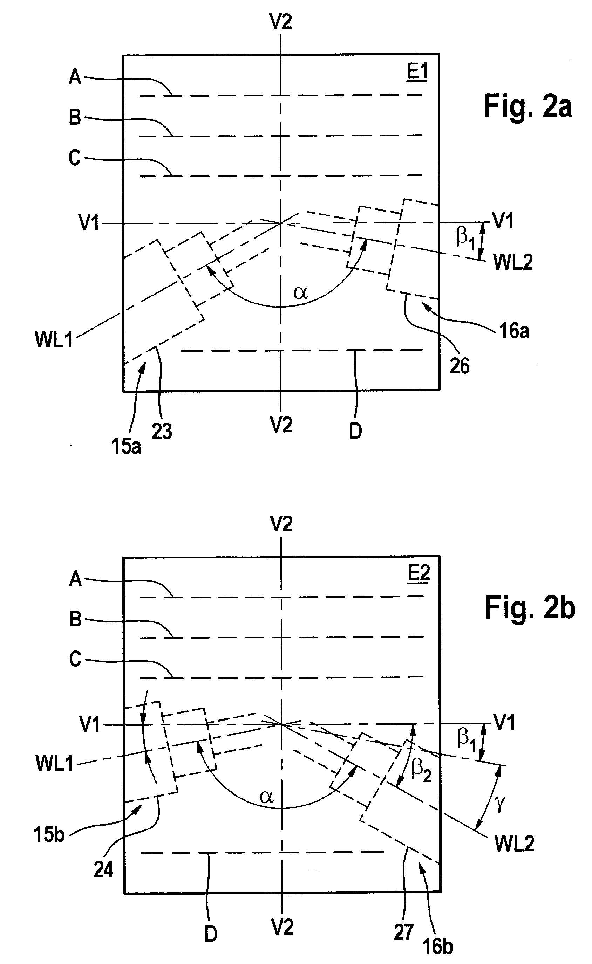

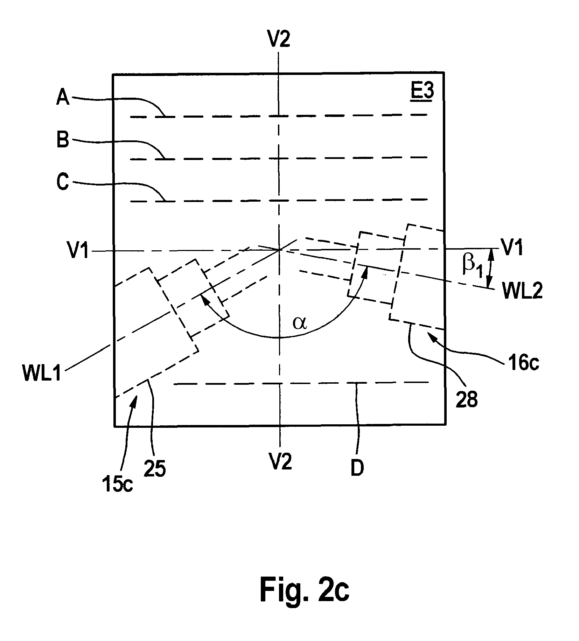

Die genaue Anordnung der Fördervorrichtungen 15a,b,c; 16a,b,c, geht im Einzelnen aus den Fig. 2 und 3 hervor. In Hinblick auf die Konfiguration vom Aufnahmekörper 21 sind prinzipiell mehrere Horizontalebenen E1, E2, E3 von mehreren Vertikalebenen V1, V2 unterscheidbar. Die entsprechenden Ebenen E1, E2, E3 sind in den Figuren - aus Gründen der Übersicht - lediglich als Geraden gekennzeichnet. Die Horizontalebenen E1, E2, E3 erstrecken sich jeweils parallel zur Oberseite 22 vom Aufnahmekörper 21. Die Vertikalebenen V1 und V2 stehen senkrecht auf der Oberseite 22 und sind rechtwinklig zueinander angeordnet. Obwohl die genannten Ebenen in der Zeichnung aus Gründen der Übersichtlichkeit als Linien dargestellt sind, versteht es sich, dass jeweils eine flächige Erstreckung gemeint ist.

Demnach sind sämtliche Aufnahmebohrungen 23-28 für die Fördervorrichtungen 15a,b,c;16a,b,c, geschichtet auf insgesamt drei Horizontalebenen E1, E2 und E3 arrangiert. Weiterhin sind die Fördervorrichtungen 15a,b,c;16a,b,c, eines Hydraulikkreises jeweils gruppenweise gebündelt zur Rechten oder zur Linken von der Vertikalebene V2 platziert. Die jeweils innerhalb der Horizontalebenen E1, E2, E3 angeordneten Aufnahmebohrungen sind nicht diametral gegenüber liegend sondern v-förmig mit konstantem Öffnungswinkel α von beispielsweise 148° zueinander angeordnet. Dabei bezeichnet der Öffnungswinkel α jeweils den Winkel bezüglich der Bewegungsachsen WL1, WL2 der Pumpenkolben in einer Horizontalebene, die von einem gemeinsamen Pumpenexzenter angetrieben werden.

Jedoch ist der Öffnungswinkel α je nach Horizontalebene um einen Offsetwinkel β1 = 6 ° oder β2 = 26° (jeweils Beispielwerte) verdreht, wobei die Fördervorrichtungen der Horizontalebenen E1 und E3 jeweils mit identischem Offsetwinkel β1 platziert sind. Zur Verdeutlichung dieser ebenenweise verteilten Anordnung der Fördervorrichtungen dienen die schematischen Schnittdarstellungen jeweils längs der jeweiligen Horizontalebenen E1, E2 und E3 gemäß Fig. 2a bis 2c.

Die beschriebene Anordnung der Aufnahmebohrungen 23-28 für Fördervorrichtungen 15a,b,c;16a,b,c ermöglicht gewissermaßen eine gruppierte Bündelung, so dass größere Bereiche vom Aufnahmekörper 21 vollständig von Fördervorrichtungen 15a,b,c;16a,b,c freigehalten sind, und aus diesem Grund vollständig zur Aufnahme irgendwelcher anderer Komponenten, Kanäle oder Bohrungen genutzt werden können.

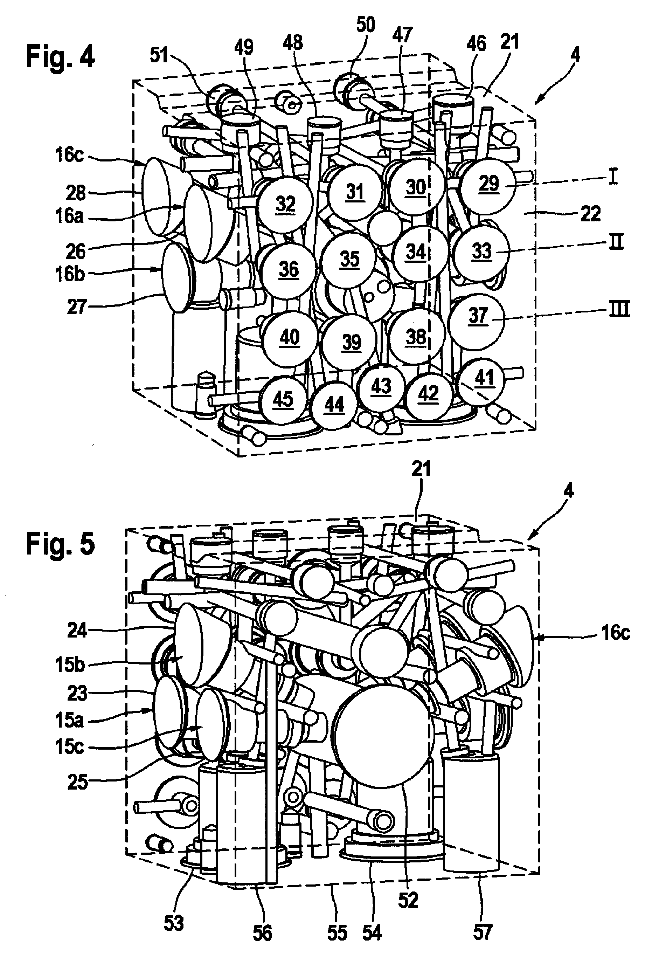

Die perspektivisch ausgerichteten Figuren 4 und 5 verdeutlichen ein Verbohrungskonzept mit den einzelnen Aufnahmebohrungen für die Komponenten des Aufnahmekörpers 21 auf Basis von der gebündelten Anordnung der Aufnahmebohrungen 23-28 für die Fördervorrichtungen 15a,b,c; 16a,b,c. Während Fig. 4 gewissermaßen auf einer primären Aufsicht auf die Oberseite 22 vom Aufnahmekörper 21 basiert, und die Ventilaufnahmebohrungen 29-40 für die Ventilreihen I,II und III, sowie Sonderaufnahmebohrungen 41 - 45, insbesondere für hydraulische Sensoren und auch Anschlüssen 46-49 für Radbremsen FR,FL,RL,RR als auch Anschüsse 50,51 für den Hauptzylinder 3 erkennen lässt, geht aus Fig. 5 gewissermaßen eine um 180° gedrehte primäre Untersicht vom Aufnahmekörper 21 hervor. Diese Untersicht lässt besonders eine Aufnahmebohrung 52 für die Antriebswelle wie auch Aufnahmebohrungen 53,54 für Niederdruckspeicher 13,14 erkennen. Beiden Ansichten ist gemeinsam, dass diese die weitgehende Achssymmetrie in der Verbohrung des Aufnahmekörpers 21 - jeweils in Relation zu der Vertikalebene V2 - erkennen lassen.

Als weiteres, zentrales Merkmal von dem Aufnahmekörper 21 ist hinzuzufügen, dass die Winkel α, β zwischen den Aufnahmebohrungen 23-28 für die Fördervorrichtungen 15a,b,c;16a,b,c derart arrangiert sind, dass alle Wirkungslinien WL1, WL2 von den Fördervorrichtungen 15a,b,c;16a,b,c tendenziell von derjenigen Stirnseite 55 des Aufnahmekörpers 21 wegweisen, von der die Aufnahmebohrungen 53,54 für die Niederdruckspeicher 13,14 , wie auch die Aufnahmebohrungen 56,57 für Dämpferkammern 58,59, im Wesentlichen lotrecht zur Stirnseite 55 in den Aufnahmekörper 21 einmünden.

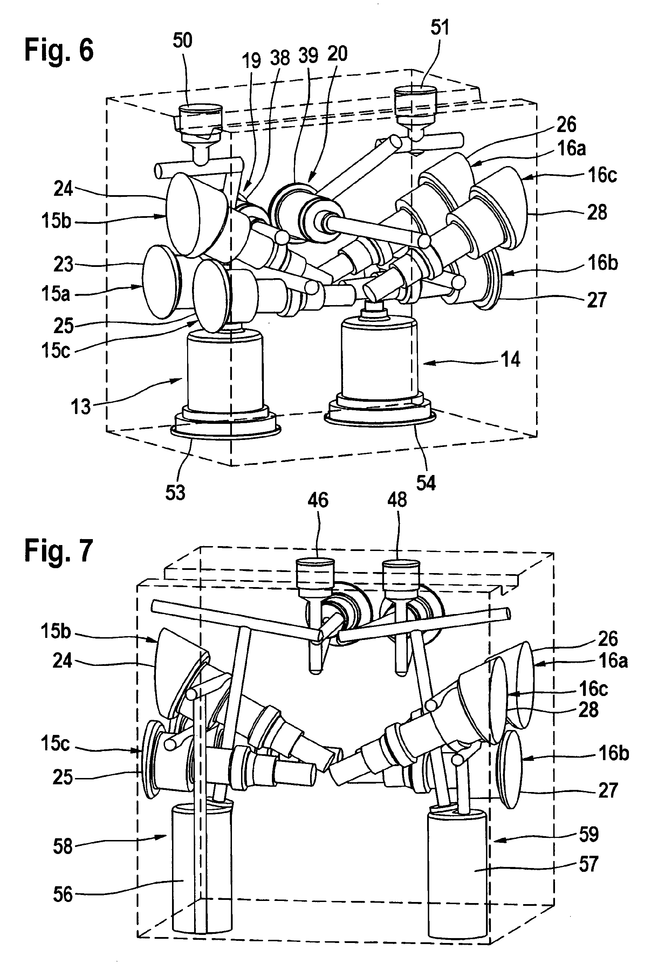

Ein zusätzlicher übersichtlicher sowie perspektivischer Überblick über die Konfiguration vom Saugpfad der Fördervorrichtungen 15a, b, c; 16a, b, c wird in Fig. 6 gewährt. Wie vorstehend beschrieben wurde, ermöglicht es primär das Umschaltventil 19,20, im Zusammenspiel mit dem Trennventil 17,18, dass sowohl aus einem Niederdruckspeicher 13,14 als auch aus einem Hauptzylinder 3 angesaugt werden kann. Zu diesem Zweck ist es vorgesehen, dass jeweils je Hydraulikkreis eine Kammer vom Hauptzylinder 3 über Kanalabschnitte mit einer Aufnahmebohrung 38,39 für das zugehörige Umschaltventil 19,20 verbunden ist. Weiterhin ist die Aufnahmebohrung 53,54 des zugehörigen Niederdruckspeichers 13,14 ebenfalls über einen Kanal mit der Aufnahmebohrung 38,39 für dieses Umschaltventil 19,20 verbunden. Ausgehend vom jeweiligen Durchlass dieses Umschaltventils 19,20 erstrecken sich im Wesentlichen zwei weitgehend lotrecht zur Oberseite 22 angeordnete Kanäle, die zum Saugbereich der zugeordneten Aufnahmebohrungen 23-28 für die Fördervorrichtungen 15a,b,c;16a,b,c geführt sind. Die Figur 6 lässt deutlich erkennen , dass bei der vorliegenden Konfiguration ein einziger Kanal jeweils einen gemeinsamen Anschluss von zwei fluchtend über einander angeordneten Fördervorrichtungen 15a,c;16a,c ermöglicht, während im Wesentlichen ein benachbarter Kanal den Anschluss der etwas abgewinkelt platzierten Fördervorrichtungen 15b,16b bewirkt.

Die Fig. 7 gewährt demgegenüber einen übersichtlichen Überblick über die vergleichsweise einfache druckseitige Verbindung der Fördervorrichtungen 15a,b,c;16a,b,c der Hydraulikkreise mit jeweils einem Radanschluss 46,47;48,49. Zu diesem Zweck ist zwischen den Fördervorrichtungen 15a,b,c;16a,b,c und dem entsprechenden Radanschluss 46,47;48,49 je Hydraulikkreis eine Dämpfungskammer 58,59 vorgesehen. Die Dämpfungskammer 58,59 ist jeweils über drei Kanalabschnitte mit dem Radanschluss 46, 47; 48, 49 verbunden. Die Anbindung der betreffenden Fördervorrichtungen 15a, b, c; 16a, b, c an die jeweilige Dämpfungskammer 58,59 erfolgt durch, im Wesentlichen zwei, lotrecht zur Oberseite, sowie zueinander weitgehend parallel in den Aufnahmekörper einmündende Kanäle, und durch einen, diese Kanäle verbindenden, Sammelkanal, der ausgehend von der Stirnseite 55 mit der Dämpfungskammer 58,59 im Wesentlichen lotrecht im Aufnahmekörper 21 verläuft.

### Bezugszeichenliste

- 1: Bremsanlage
- 2: Betätigungseinheit
- 3: Hauptzylinder
- 4: Hydraulikaggregat (HCU)
- 5: stromlos offenes Ventil (Einlass)
- 6: SO-Ventil
- 7: SO-Ventil
- 8: SO-Ventil
- 9: stromlos geschlossenes Ventil (Auslass)
- 10: SG-Ventil
- 11: SG-Ventil
- 12: SG-Ventil
- 13: Niederdruckspeicher (NDS)
- 14: Niederdruckspeicher (NDS)
- 15a,b,c: Fördervorrichtung
- 16a,b,c: Fördervorrichtung
- 17: Trennventil (TV)
- 18: Trennventil (TV)
- 19: elektronisches Umschaltventil (EUV)
- 20: elektronisches Umschaltventil (EUV)
- 21: Aufnahmekörper
- 22: Oberseite
- 23: Aufnahmebohrung (Pumpe)
- 24: Aufnahmebohrung (Pumpe)
- 25: Aufnahmebohrung (Pumpe)
- 26: Aufnahmebohrung (Pumpe)
- 27: Aufnahmebohrung (Pumpe)
- 28: Aufnahmebohrung (Pumpe)
- 29: Ventilaufnahmebohrung
- 30: Ventilaufnahmebohrung
- 31: Ventilaufnahmebohrung
- 32: Ventilaufnahmebohrung
- 33: Ventilaufnahmebohrung
- 34: Ventilaufnahmebohrung
- 35: Ventilaufnahmebohrung
- 36: Ventilaufnahmebohrung
- 37: Ventilaufnahmebohrung
- 38: Ventilaufnahmebohrung
- 39: Ventilaufnahmebohrung
- 40: Ventilaufnahmebohrung
- 41: Sonderaufnahmebohrung
- 42: Sonderaufnahmebohrung
- 43: Sonderaufnahmebohrung
- 44: Sonderaufnahmebohrung
- 45: Sonderaufnahmebohrung
- 46: Radanschluss
- 47: Radanschluss
- 48: Radanschluss
- 49: Radanschluss
- 50: Anschluss (THZ)
- 51: Anschluss (THZ)
- 52: Aufnahmebohrung (Antriebswelle)
- 53: Aufnahmebohrung (NDS)
- 54: Aufnahmebohrung (NDS)
- 55: Stirnseite
- 56: Aufnahmebohrung (Dämpferkammer)
- 57: Aufnahmebohrung (Dämpferkammer)
- 58: Dämpferkammer
- 59: Dämpferkammer

- A,B,C,D: (Ventil)Reihe
- ECU: elektronische Steuerung
- E1, E2, E3: Horizontalebene
- FR,FL,RR,RL: Radbremsen
- PC: Primärdruckkammer
- SC: Sekundärdruckkammer
- V1, V2: Vertikalebene
- WL1, WL2: Wirkungslinie
- X1, X2, X3: Exzenter
- α: Öffnungswinkel
- β1, 2: Offsetwinkel
- γ: Winkel

## Patentansprüche

1. Hydraulikaggregat (4) für schlupfgeregelte Bremsanlagen, mit einem quaderförmigen Aufnahmekörper (21), der rechtwinklig zu einer Oberseite (22) in mehreren Ventilaufnahmebohrungen (29-36) einer ersten und zweiten Ventilreihe (A,B) stromlos offene und stromlos geschlossene Ventile aufnimmt, mit weiteren, im Abstand zu der ersten und der zweiten Ventilreihe (A,B), rechtwinklig zur Oberseite (22) angeordneten Aufnahmebohrungen (37-45) für Ventilreihen (C,D) und/oder für andere Komponenten, wie insbesondere für Drucksensoren, mit mehreren Aufnahmebohrungen (23-28) für Fördervorrichtungen (15a,b,c;16a,b,c), welche gruppenweise gebündelt mehreren Hydraulikkreisen zugeordnet sind, wobei die Aufnahmebohrungen (23-28) für die Fördervorrichtungen (15a,b,c;16a,b,c) parallel zur Oberseite (22) im Abstand zueinander angeordnet sind, sowie eine Antriebswelle mit, im Abstand von Horizontalebenen (E1, E2, E3) gesondert platzierten drei Exzentern (X1, X2, X3) zum Antrieb der Fördervorrichtungen (15a,b,c;16a,b,c), sowie mit mehreren, die Aufnahmebohrungen (23-28) für die Fördervorrichtungen (15a,b,c;16a,b,c) mit den Ventilaufnahmebohrungen (29-36) verbindenden, Druckmittelkanälen, um eine hydraulische Verbindung zwischen den Fördervorrichtungen (15a,b,c;16a,b,c) und Radanschlüssen (46-49) zu ermöglichen, wobei jeweils parallel zu der Oberseite (22) drei gedachte Horizontalebenen (E1, E2, E3) arrangiert sind, wobei die Horizontalebenen (E1, E2, E3) jeweils zwei v-förmig mit einem Öffnungswinkel (α) zueinander angeordnete Aufnahmebohrungen (23-28) für die Fördervorrichtungen (15a,b,c;16a,b,c) aufnehmen, wobei jeweils zwei Aufnahmebohrungen (23, 25;26,28) der Fördervorrichtungen (15a,15c;16a,16c) eines gemeinsamen Hydraulikkreises lotrecht zur Oberseite (22), sowie vertikal deckungsgleich über einander angeordnet sind, wobei eine Aufnahmebohrung (24; 27) für eine Fördervorrichtung (15b;16b) desselben Hydraulikkreises im spitzen Winkel (γ) versetzt zu den beiden anderen Aufnahmebohrungen (23, 25; 26, 28) desselben Hydraulikkreises vorgesehen ist, und wobei der Öffnungswinkel (α) zwischen den Aufnahmebohrungen (23-28) für die Fördervorrichtungen (15a, b, c; 16a, b, c) derart arrangiert ist, dass alle Wirkungslinien (WL1, WL2) von den Fördervorrichtungen (15a, b, c; 16a, b, c) tendenziell von einer Stirnseite (55) des Aufnahmekörpers (21) wegweisen, in welcher wenigstens eine Aufnahmebohrung (53;54) für einen Niederdruckspeicher (13;14) einmündet.

2. Hydraulikaggregat nach Anspruch 1, **dadurch gekennzeichnet, daß** der Öffnungswinkel (α) über alle Horizontalebenen (E1, E2, E3) konstant ausgebildet ist.

3. Hydraulikaggregat nach Anspruch 2, **dadurch gekennzeichnet, daß** der bezüglich zweier Bezugsachsen (WL1, WL2) der Fördervorrichtungen (15a,15c;16a,16c) in einer Horizontalebene gemessene Öffnungswinkel (α) um einen Offsetwinkel (β1, β2) aus zwei Vertikalebenen (V1, V2) versetzt angeordnet ist, die senkrecht auf der Oberseite (22) stehen.

4. Hydraulikaggregat nach Anspruch 3, **dadurch gekennzeichnet, daß** der Offsetwinkel (β1, β2) zwei unterschiedliche Werte aufweist, und dass die Werte von Horizontalebene (E1-E3) zu Horizontalebene (E1-E3) abwechselnd vorgesehen sind.

5. Hydraulikaggregat nach Anspruch 1, **dadurch gekennzeichnet, daß** das Bohrungsarrangement vom Aufnahmekörper (21) im Wesentlichen symmetrisch zu einer gedachten Vertikalebene (V2) ausgebildete Bohrungsachsen aufweist.

6. Hydraulikaggregat nach Anspruch 1, **dadurch gekennzeichnet, daß** die Abstände zwischen den unterschiedlichen Horizontalebenen (E1, E2, E3) zu gleichen Teilen ausgebildet sind.

7. Hydraulikaggregat nach Anspruch 1, **dadurch gekennzeichnet, daß** die Aufnahmebohrungen (23-28) für die Fördervorrichtungen (15a,b,c;16a,b,c) eines Hydraulikkreises jeweils einheitlich von einer Stirnseite (55) des Aufnahmekörpers (21) ausgehen.

8. Hydraulikaggregat nach Anspruch 1, **dadurch gekennzeichnet, daß** die Horizontalebene (E2) mit der spitzwinklig versetzten Aufnahmebohrung (24;27) mittig zwischen den Horizontalebenen (E1, E3) der fluchtend übereinander platzierten Aufnahmebohrungen (23,25;26,28) angeordnet ist.

9. Hydraulikaggregat nach Anspruch 1, **dadurch gekennzeichnet, daß** Ventilaufnahmebohrungen (29-40) im Wesentlichen lotrecht oberhalb von den Aufnahmebohrungen (23-28) für Fördervorrichtungen (15a,b,c;16a,b,c) angeordnet sind, so dass für eine saugseitige gruppenweise Bündelung der Fördervorrichtungen (15a, b, c; 16a, b, c) im Wesentlichen lineare Kanalabschnitte vorgesehen sind, welche ausgehend von diesen Ventilaufnahmebohrungen (29-40) lotrecht in den Aufnahmekörper (21) eintreten, und in die Aufnahmebohrungen (23-28) der Fördervorrichtungen (15a,b,c;16a,b,c) einmünden.

## Claims

1. Hydraulic unit (4) for slip-controlled braking systems, with a parallelepipedic receiving body (21) which receives at right angles to an upper face (22) currentlessly open and currentlessly closed valves in a plurality of valve receiving bores (29-36) of a first and second valve row (A,B), with further receiving bores (37-45) arranged at a distance from the first and second valve rows (A,B) and at right angles to the upper face (22) for valve rows (C,D) and/or for other components such as, in particular, pressure sensors, with a plurality of receiving bores (23-28) for pumping devices (15a, b, c; 16a, b, c) which are bundled in groups associated with a plurality of hydraulic circuits, the receiving bores (23-28) for the pumping devices (15a, b, c; 16a, b, c) being arranged parallel to the upper face (22) at a distance from one another, and a drive shaft with eccentrics (X1, X2, X3) positioned separately at the spacing of horizontal planes (E1, E2, E3) for driving the pumping devices (15a,b,c;16a,b,c), and with a plurality of pressure medium channels which connect the receiving bores (23-28) for the pumping devices (15a, b, c; 16a, b, c) to the valve receiving bores (29-36) in order to make possible a hydraulic connection between the pumping devices (15a,b,c;16a,b,c) and wheel connections (46-49),
three imaginary horizontal planes (E1, E2, E3) being each arranged parallel to the upper face (22), the horizontal planes (E1, E2, E3) each receiving two receiving bores (23-28) arranged in a V-formation with an aperture angle (α) for the pumping devices (15a,b,c;16a,b,c), two receiving bores each (23,25; 26,28) of the pumping devices (15a,15c;16a,16c) of a common hydraulic circuit being arranged perpendicularly to the upper face (22) and congruently one above the other in a vertical direction, one receiving bore (24;27) for a pumping device (15b;16b) of the same hydraulic circuit being offset by an acute angle (y) with respect to the two other receiving bores (23,25;26,28) of the same hydraulic circuit, and the aperture angle (α) between the receiving bores (23-28) for the pumping devices (15a,b,c;16a,b,c) being arranged in such a manner that, according to tendency, all the working lines (WL1, WL2) of the pumping devices (15a, b, c; 16a, b, c) are oriented away from an end face (55) of the receiving body (21), into which end face at least one receiving bore (53; 54) for a low-pressure accumulator (13; 14) opens.

2. Hydraulic unit according to Claim 1, **characterized in that** the aperture angle (α) is configured constant over all the horizontal planes (E1, E2, E3).

3. Hydraulic unit according to Claim 2, **characterized in that** the aperture angle (α), measured with respect to two reference axes (WL1, WL2) of the pumping devices (15a,15c;16a,16c) in a horizontal plane, is arranged offset by an offset angle (β1, β2) of two vertical planes (V1, V2) which are perpendicular to the upper face (22).

4. Hydraulic unit according to Claim 3, **characterized in that** the offset angle (β1, β2) has two different values, and **in that** the values alternate from horizontal plane (E1-E3) to horizontal plane (E1-E3).

5. Hydraulic unit according to Claim 1, **characterized in that** the drilling arrangement of the receiving body (21) has drilling axes configured substantially symmetrically with respect to an imaginary vertical plane (V2).

6. Hydraulic unit according to Claim 1, **characterized in that** the distances between the different horizontal planes (E1,E2,E3) are configured equal.

7. Hydraulic unit according to Claim 1, **characterized in that** the receiving bores (23-28) for the pumping devices (15a, b, c; 16a, b, c) of a hydraulic circuit each start uniformly from an end face (55) of the receiving body (21).

8. Hydraulic unit according to Claim 1, **characterized in that** the horizontal plane (E2) with the receiving bore (24;27) offset at an acute angle is arranged centrally between the horizontal planes (E1,E3) of the receiving bores (23,25;26,28) positioned in alignment one above the other.

9. Hydraulic unit according to Claim 1, **characterized in that** valve receiving bores (29-40) are arranged substantially perpendicularly above the receiving bores (23-28) for pumping devices (15a,b,c;16a,b,c), so that, for a bundled group of the pumping devices (15a,b,c;16a,b,c) on the suction side, substantially linear channel sections are provided, which channel sections, starting from these valve receiving bores (29-40), enter the receiving body (21) perpendicularly and open into the receiving bores (23-28) of the pumping devices (15a,b,c;16a,b,c).

## Revendications

1. Groupe hydraulique (4) pour systèmes de freinage à régulation antipatinage, comprenant un corps de réception parallélépipédique (21), qui reçoit, perpendiculairement à un côté supérieur (22), des soupapes ouvertes en l'absence de courant et fermées en l'absence de courant dans plusieurs alésages de réception de soupape (29-36) d'une première et d'une deuxième rangée de soupapes (A, B), comprenant des alésages de réception supplémentaires (37-46) disposés à distance de la première et de la deuxième rangée de soupapes (A, B), perpendiculairement au côté supérieur (22), pour des rangées de soupapes (C, D) et/ou pour d'autres composants, comme en particulier des capteurs de pression, comprenant plusieurs alésages de réception (23-28) pour des dispositifs de refoulement (15a, b, c ; 16a, b, c), lesquels sont associés, de manière rassemblée en groupes, à plusieurs circuits hydrauliques, les alésages de réception (23-28) pour les dispositifs de refoulement (15a, b, c ; 16a, b, c) étant disposés à distance les uns des autres parallèlement au côté supérieur (22), ainsi qu'un arbre d'entraînement comprenant trois excentriques (X1, X2, X3) placés séparément à distance de plans horizontaux (E1, E2, E3) pour l'entraînement des dispositifs de refoulement (15a, b, c ; 16a, b, c), ainsi que plusieurs canaux de fluide sous pression reliant les alésages de réception (23-28) pour les dispositifs de refoulement (15a, b, c ; 16a, b, c) aux alésages de réception de soupape (29-36), afin de rendre possible une liaison hydraulique entre les dispositifs de refoulement (15a, b, c ; 16a, b, c) et des raccords de roue (46-49), trois plans horizontaux imaginaires (E1, E2, E3) étant agencés respectivement parallèlement au côté supérieur (22), les plans horizontaux (E1, E2, E3) recevant respectivement deux alésages de réception (23-28) disposés en forme de V l'un par rapport à l'autre suivant un angle d'ouverture (α) pour les dispositifs de refoulement (15a, b, c ; 16a, b, c), deux alésages de réception (23, 25 ; 26, 28) des dispositifs de refoulement (15a, 15c ; 16a, 16c) d'un circuit hydraulique commun étant respectivement disposés perpendiculairement au côté supérieur (22) ainsi que de manière verticalement superposée en coïncidence, un alésage de réception (24 ; 27) pour un dispositif de refoulement (15b ; 16b) du même circuit hydraulique étant prévu de manière décalée suivant un angle aigu (γ) par rapport aux deux autres alésages de réception (23, 25 ; 26, 28) du même circuit hydraulique, et l'angle d'ouverture (α) entre les alésages de réception (23-28) pour les dispositifs de refoulement (15a, b, c ; 16a, b, c) étant agencé de telle sorte que toutes les lignes d'action (WL1, WL2) des dispositifs de refoulement (15a, b, c ; 16a, b, c) tendent à être orientées à l'écart d'un côté frontal (55) du corps de réception (21) dans lequel débouche au moins un alésage de réception (53 ; 54) pour un accumulateur basse pression (13 ; 14).

2. Groupe hydraulique selon la revendication 1, **caractérisé en ce que** l'angle d'ouverture (α) est réalisé de manière constante sur tous les plans horizontaux (E1, E2, E3).

3. Groupe hydraulique selon la revendication 2, **caractérisé en ce que** l'angle d'ouverture (α) mesuré dans un plan horizontal par rapport à deux axes de référence (WL1, WL2) des dispositifs de refoulement (15a, 15c ; 16a, 16c) est disposé de manière décalée d'un angle de décalage (β1, β2) hors de deux plans verticaux (V1, V2) qui sont situés perpendiculairement au côté supérieur (22).

4. Groupe hydraulique selon la revendication 3, **caractérisé en ce que** l'angle de décalage (β1, β2) présente deux valeurs différentes, et **en ce que** les valeurs sont prévues de manière à alterner d'un plan horizontal (E1-E3) à un autre plan horizontal (E1-E3).

5. Groupe hydraulique selon la revendication 1, **caractérisé en ce que** l'agencement d'alésages du corps de réception (21) présente des axes d'alésage réalisés essentiellement symétriquement par rapport à un plan vertical imaginaire (V2).

6. Groupe hydraulique selon la revendication 1, **caractérisé en ce que** les distances entre les différents plans horizontaux (E1, E2, E3) sont réalisées de manière égale.

7. Groupe hydraulique selon la revendication 1, **caractérisé en ce que** les alésages de réception (23-28) pour les dispositifs de refoulement (15a, b, c ; 16a, b, c) d'un circuit hydraulique partent respectivement uniformément d'un côté frontal (55) du corps de réception (21).

8. Groupe hydraulique selon la revendication 1, **caractérisé en ce que** le plan horizontal (E2) comprenant l'alésage de réception (24 ; 27) décalé suivant un angle aigu est disposé centralement entre les plans horizontaux (E1, E3) des alésages de réception (23, 25 ; 26, 28) superposés de manière alignée.

9. Groupe hydraulique selon la revendication 1, **caractérisé en ce que** des alésages de réception de soupape (29-40) sont disposés essentiellement perpendiculairement au-dessus des alésages de réception (23-28) pour des dispositifs de refoulement (15a, b, c ; 16a, b, c), de telle sorte que des portions de canal essentiellement linéaires soient prévues pour un rassemblement en groupes des dispositifs de refoulement (15a, b, c ; 16a, b, c) du côté de l'aspiration, lesquelles portions de canal, à partir de ces alésages de réception de soupape (29-40), pénètrent perpendiculairement dans le corps de réception (21), et débouchent dans les alésages de réception (23-28) des dispositifs de refoulement (15a, b, c ; 16a, b, c).
